# EUROPEAN PATENT APPLICATION

(11) **EP 1 760 613 A2**
(43) Date of publication of application: **07.03.2007**
(21) Application number: 06019863.7
(22) Date of filing: 30.06.2000
(51) Int. Cl.: G06F 17/30

(54) **System and method for capturing and managing information from digital source**

(30) Priority: 02.07.1999 US 142237 P
(62) Divisional of application: 00946945.3
(71) Applicant: Interwoven, Inc., Sunnyvale CA 94089 (US)
(72) Inventor: Wadhwani, David, San Francisco, CA 94116 (US); Buchheim, Dennis S., Palo Alto, CA 94306 (US); Buchheim, Richard S., Half Moon Bay, CA 94019 (US); Raposa, Scott A., Mountain View, CA 94043 (US); Malasky, Ethan F., San Francisco, CA 94100 (US)
(74) Representative: Schoppe, Fritz

(57) **Abstract**

A system and method is provided for allowing a user to capture in addition to other items, items of granular information, meaning the subcomponents of information from a document or encompassing file which are of concern to the user. I addition, a Context Database is created for the user which includes the captured items, files associated with the items, and meta-data that includes keywords associated with the item. The Context Database is queried for the generation of a Context Summary in response to selections by the user of words entered by a user. The Context Summary is used to enhance searching and to select targeted advertisements for display to the user based on the user's currently active information.

## Description

### CROSS REFERENCE TO RELATED APPLICATION

This application claims priority under 35 U.S.C. δ 119(e) to U.S. provisional patent application serial no. 60/142,237, entitled "System and Method for Capturing and Managing Information from Digital Sources", by inventors David S. Wadhwani, Dennis S. Buchheim, Richard S. Buchheim, Scott A. Raposa and Ethan F. Malasky, filed July 2, 1999 hereafter "Provisional Application", which is hereby incorporated by reference.

### BACKGROUND

The prominence of the World Wide Web as an important source of information has driven end-users and product developers in their search for ways to effectively capture useful information from digital sources such as e-mail, Web pages, and documents in word processing applications.

One basic class of capture techniques is the *Standalone capture* techniques. For example, if a user desires to save a paragraph on a Web page, he may print the contents of a Web page, save the Web page objects as HTML or text files, copy and paste the Web page contents to a "carrier" document using products such as Microsoft Word or PowerPoint, or simply write down Web page contents of interest on paper. Another capture technique uses *Browser-based page capture* tools which include the Favorites or Bookmark tools available in most browsers, which capture and manage links to interesting sites visited, and *offline browsers* (also known as "page grabbers"), which capture and manage the entire content of Web pages or sites in files on the local disk for subsequent browsing.

Standalone capture techniques all have serious limitations. Hard copies have only very limited options for aggregation and presentation and are easily damaged or destroyed. Capturing Web objects in files is cumbersome and time-consuming. Usually only a single object is stored per file, even if multiple objects logically belong together. The object typically must be managed with the limited facilities of the standard file system (e.g. Windows Explorer), and aggregating objects in files typically requires manual pasting into carrier documents.

Use of carrier documents to capture Web objects is extremely labor and system resource-intensive, often results in subtle or even radical alteration in the appearance of the captured object, and, unless extraordinary means such as storing objects one-per-document under a document management system are employed, the use of carrier documents provides only limited and coarse-grained management and retrieval capabilities.

Browser-based page capture tools also have serious limitations. Capturing links to Web sites and Web pages or capturing the entire content of these sites and pages is, by definition, a coarse-grained action so there will be extraneous information accessed and the user will have no control over the way the captured content is organized. Page capture tools (whether link- or content-based) typically utilize only a name string, URL, and structure information for classification and management. Additional classification tools such as keywords, and notes are generally either unavailable or effectively unusable since coarse-grained, statically aggregated pages containing multiple items that typically cannot be described in specific, meaningful terms.

The coarse-grained nature of page or site-based management and the lack of sophisticated classification tools make the process of locating information in an extensive Favorites list or offline page storage area cumbersome, effectively limiting the size to which such facilities can grow

Purely link-based site or page capture provides neither a stable nor a guaranteed accurate result since the content of addressed pages changes without notice, links become stale, and dynamic pages disappear after they are accessed

To date, businesses engaged in e-commerce have generally depended on high-traffic Web sites such as search portals both for gathering promotions targeting information about customers and for actually delivering the advertising. These high-traffic sites typically obtain information about customer interests and buying patterns through two primary techniques. First, sites implicitly gather information through tracking "click trails" to determined what sites a user visits, and what links a user follows. Second, sites explicitly gather information through promotions, contests, and site personalization features in which customers voluntarily provide more information about themselves in exchange for additional services, greater online convenience, or a chance to win prizes.

A major limitation has been the inability of current Internet information gathering techniques to provide specific actionable information about consumers. Even portal site "personalization" has its limits, since users must "opt in" and set up personalized pages, yielding limited amounts of user data.

The ability to provide a context-some underlying, surrounding, or background information is highly desirable in assisting search engines in finding the desired information. For example, a user may be seeking information on the treatment of elephants in Africa, but a query will contain numerous results on the treatment of elephants in circuses.

It is highly desirable to provide fine-grained access and storage of granular information which can also be used to provide a context for searches and advertising that are targeted to the user's needs or desires.

### Summary

The present invention provides a system and method for capturing and managing information from digital sources.

In one aspect, the present invention allows a user to capture and manage granular information from a digital source, such as a Web site, e-mail or electronic document Generally, to capture granular information for example a paragraph, from a Web site, or other digital source, a user highlights the desired information on the Web site and activates a capture control on a user interface such as a browser indicating that the highlighted information is to be captured. In another aspect of the invention, the captured information, hereafter also referred to as an item, is stored in a uniform file format such as enriched HTML/XML which advantageously permits fine-grained access to and retrieval of the captured information. Each item is stored in a item access system. One embodiment of a item access system is a file system in which items are stored in files. The item is also analyzed and organized by assigning meta-data to the captured information. Examples of such meta-data include the captured information's name, category, keywords, source, source description, date and time of capture. The user may select the meta-data for a captured item suggested by the present invention or alternatively, the user may enter his or her own meta-data.
The present invention also manages the items of granular information using a Context Database comprising the items, any associated files and the meta-data associated with the items. Once an item of information is captured and stored in a file, its meta-data is integrated within a database, such as an SQL database, to aid in the classification, annotation, structuring, and management of the captured information. The Context Database allows a user to dynamically aggregate the captured information. In other words, the user may combine or reorganize different captured information items. One embodiment of a Context Database is a WebBase in which the items are stored in a markup language such as HTML / XML so that items are easily managed over the Internet. The WebBase embodiment of the present invention brings together the power of a database and the ubiquity of Web pages. This melding of Web pages and a SQL database enables many peripheral features, like sharing and importing/exporting with little additional work.

In another aspect, the present invention uses the Context Database to deliver targeted promotions for merchandise, services, and content, and to assist the user in finding additional information similar to the information that has already been captured. Generally, the present invention analyzes the meta-data associated with each captured item and the relationships among the items and the relationships between items and their meta-data stored in the Context Database to create a Summary of the particular user's interest at any given moment. The resulting Summary provides a synopsis of the user's interest in a format that can be analyzed by a computer and can then be used to provide targeted and timely promotional links to specific merchandise, services, and content when the user retrieves an item from the WebBase.

In yet another aspect, the present invention uses the meta-data associated with the captured information in the Context Database to improve searches performed on digital information systems such as the Internet. Generally, when the user initiates a search, the present invention analyzes a Summary of the user's interests relevant to the search to determine which words to use in the search and how to use those words in the query. Thus, the meta-data associated with captured information is used to create a powerful search query which adds information from the user's Summary of interests which can then be passed along to existing search portals.

Thus, the present invention advantageously allows a user to capture and manage granular information from digital sources.

### BRIEF DESCRIPTION OF THE DRAWINGS

The following figures illustrate embodiments of the present invention. The following description of embodiments of the present invention is presented for purposes of illustration and description and is not intended to be exhaustive or to limit the invention to the precise form disclosed. Many modifications and variations are possible in light of the teachings, and it is intended that the scope of the invention be limited not by this detailed description, but rather by the claims appended hereto.
Figure 1 shows one embodiment of a system for capturing and managing granular information from a digital source in accordance with the present invention.
Figure 2A shows an embodiment of a user interface employed in a system for capturing granular information in accordance with the present invention.
Figure 2B shows an embodiment of aggregated granular items of a collection displayed in a browser display.
Figure 2C shows an embodiment of a pop-up window through which a user may indicate whether the selected item is to be saved in its granular form by selecting "Web Content" for the item or whether to save a link to the webpage from which the item came by selecting "Web Link".
Figure 2D shows an embodiment of a user interface, a pop-up window, in which meta-data is displayed to the user and which accepts the additions or changes to the meta-data from the user.
Figure 2E shows an embodiment of user interface as a pop-up window which is displayed to the user to allow annotation of an item.
Figure 2F shows an embodiment of user interface as a pop-up window which is displayed to a user for changing the appearance of the item.
Figure 3A illustrates an embodiment of a computer-implemented system for capturing and managing items of both a coarse-grained and granular information from digital sources as embodied within the environment of a browser.
Figure 3B illustrates an embodiment of a Context Database as a WebBase comprising files, including a file for each item captured, stored in a hierarchy of collections, and meta-data stored as SQL database entries according to table definitions.
Figure 3C shows an embodiment of a user interface, a pop-up window, for allowing a user to create a Filter of his or her Context Database.
Figure 3D shows an embodiment of a user interface, a pop-up window in which the filters that apply to a collection are displayed.
Figure 4 is a flow diagram of an embodiment of an overall method of formatting an item to a uniform file format.
Figures 5A and 5B show an overall flow diagram of one embodiment of a process of generating meta-data for an item.
Figure 6A illustrates an embodiment of an item access system as a file system hierarchy for an item and the objects it references.
Figure 6B illustrates an example of how 3 items with references to external files are stored in the file system embodiment of Figure 6A.
Figure 7A is a flow diagram of an embodiment of a method for creating a Context Summary based upon an embodiment of a Context Database when a user selects an item or collection.
Figure 7B illustrates an example of applying the method in Figure 7A.
Figure 8A is a flow diagram of an embodiment of a method of selecting a targeted advertisement using the Context Summary in accordance with the present invention.
Figure 8B is a flow diagram of an embodiment of a method of enhanced searching.
Figure 9A illustrates a user's selection of an item in an embodiment of a user interface.
Figure 9B illustrates an example of an enhanced search query and suggested keywords produced from the method of Figure 8B.
Figure 9C shows an embodiment of a web page including a targeted ad selected from the method of Figure 8A.

### DETAILED DESCRIPTION

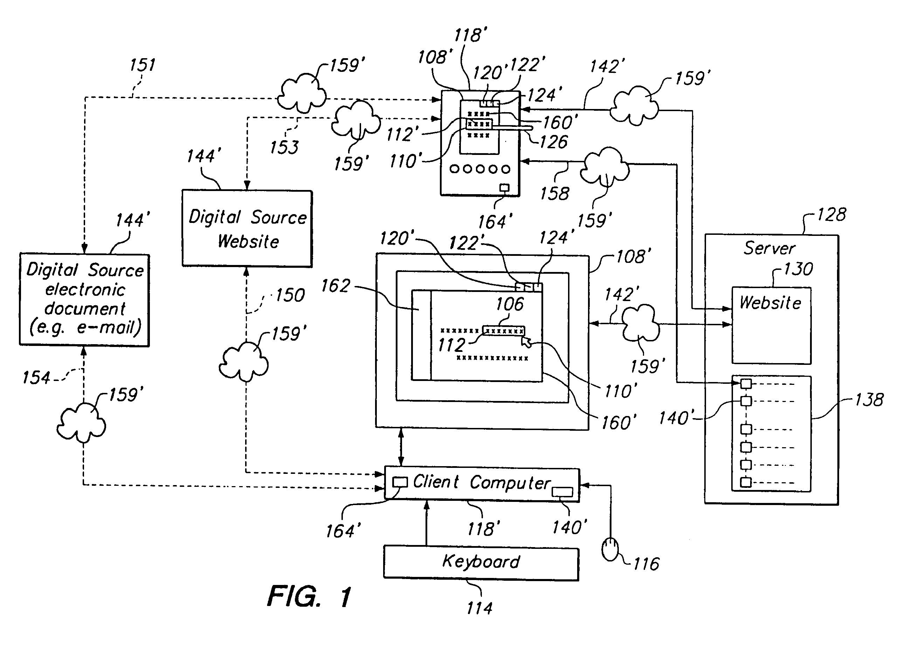

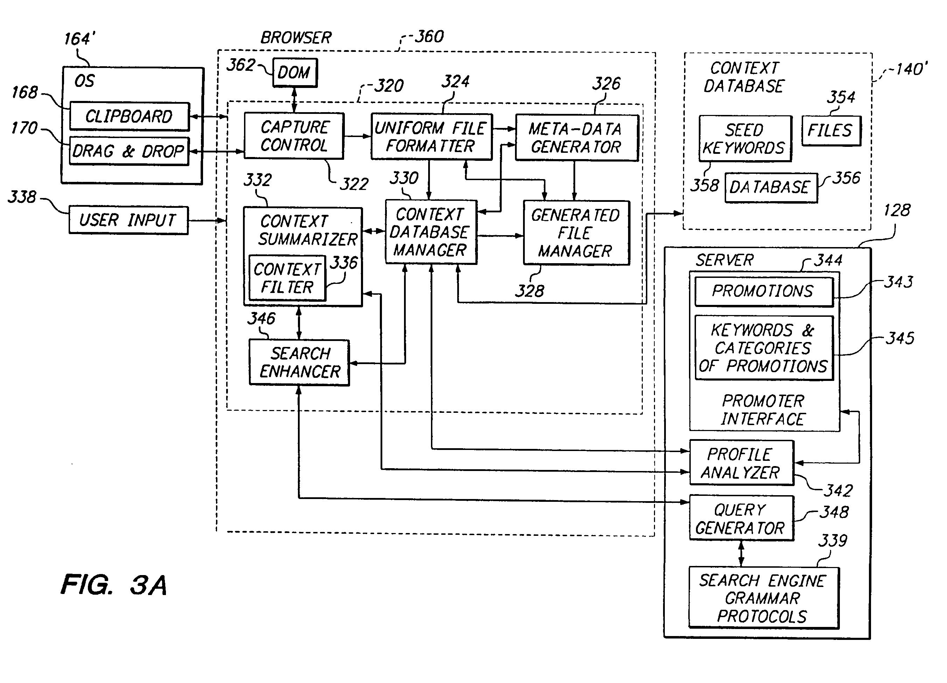

Figure 1 shows one embodiment of a system for capturing and managing granular information from a digital source in accordance with the present invention comprising an embodiment of a client computer 118' having an operating system 164', a memory area comprising a storage area for a user's Context Database 140', display 108' in which a user interface 160' such as a browser display, input devices keyboard 114 and mouse 116, a server 128 in communication 142' over a network 159' such as the Internet with the client computer 118', the server hosting a website 130 with which the client computer 118' communicates and a storage area 138 for providing an alternate storage location for a plurality of Context Databases 140', digital sources such as a website 144 and an e-mail or electronic document 148 are also in communication 150, 154 with the client computer 118'. Another embodiment of a client computer is also shown in Figure 1 as a personal digital assistant 118' having a display 108' and a stylus 126 as a user input device, and an operating system 164'. The personal digital assistant (PDA) is also in communication 158 over a network 159' with server 128. Figure 3A shows that the operating system has a clipboard structure 168 and a drag and drop infrastructure 170.

The PDA embodiment 118' also has a user interface, for example a browser display 160', for displaying information to the user. The browser display 160' has a capture control, shown here embodied as a toolbar with three click buttons 120', 122' and 124' and an item access window 162 for displaying items in the user's Context Database. In these embodiments, highlight click button 120' activates a highlighting feature for selecting information of interest. One click capture button 122' is activated by the user to indicate that the information is to be captured. A third click button 124' is shown in these examples which will cause the user's granular items to be displayed to the user if they are not visible.

In Figure 1, each display indicates a user's selection 110 of a granular item of information 112' that is selected responsive to a user's operation of an input device, such as the mouse 116 or the stylus 126 in accordance with the operating system's drop and drag infrastructure. The keyboard 114 may also be used as well as any other input devices for selecting the desired granular item of information. The user may also click on the highlight button 124', run a cursor over the granular information to be selected using an input device. The user then clicks on the one click capture button 122' to indicate to capture the selected item .

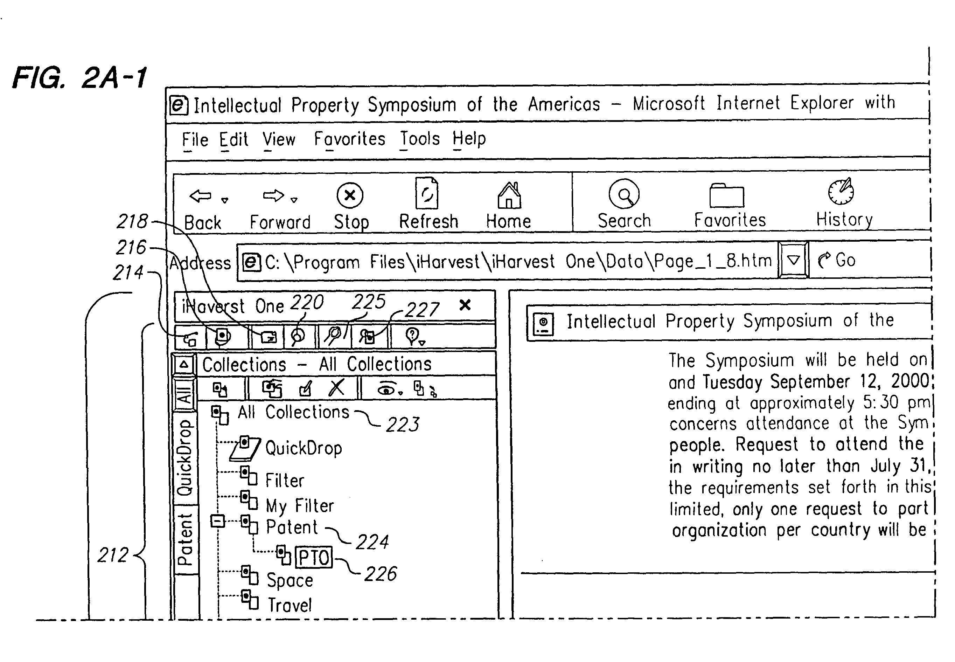

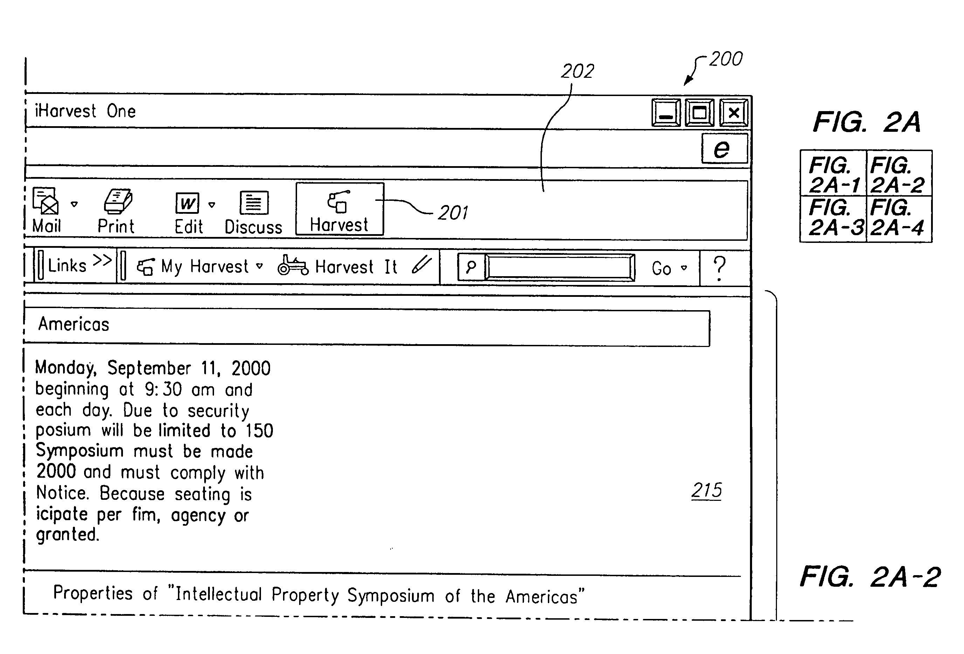

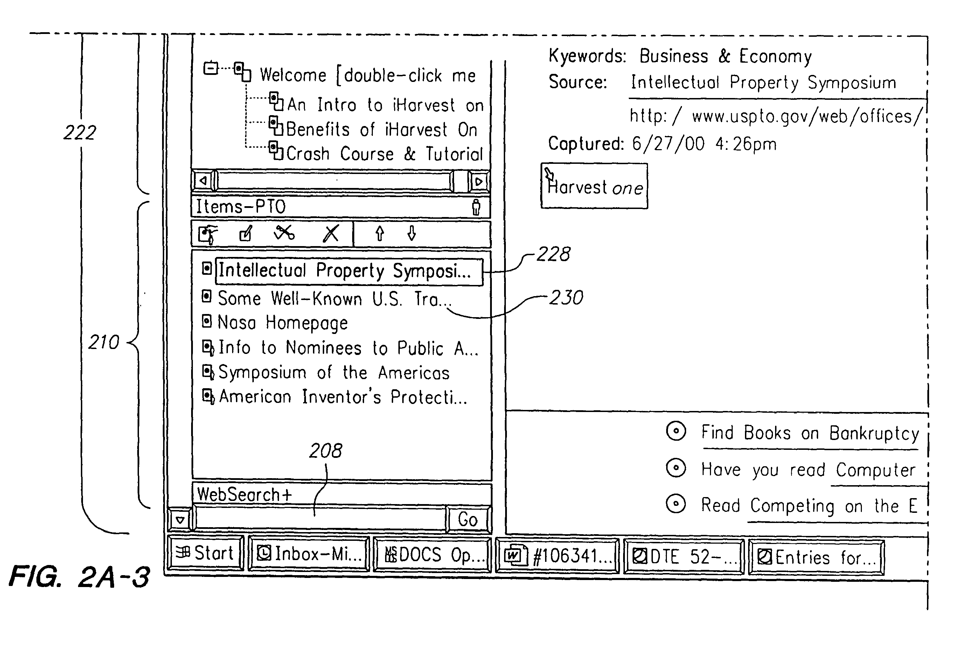

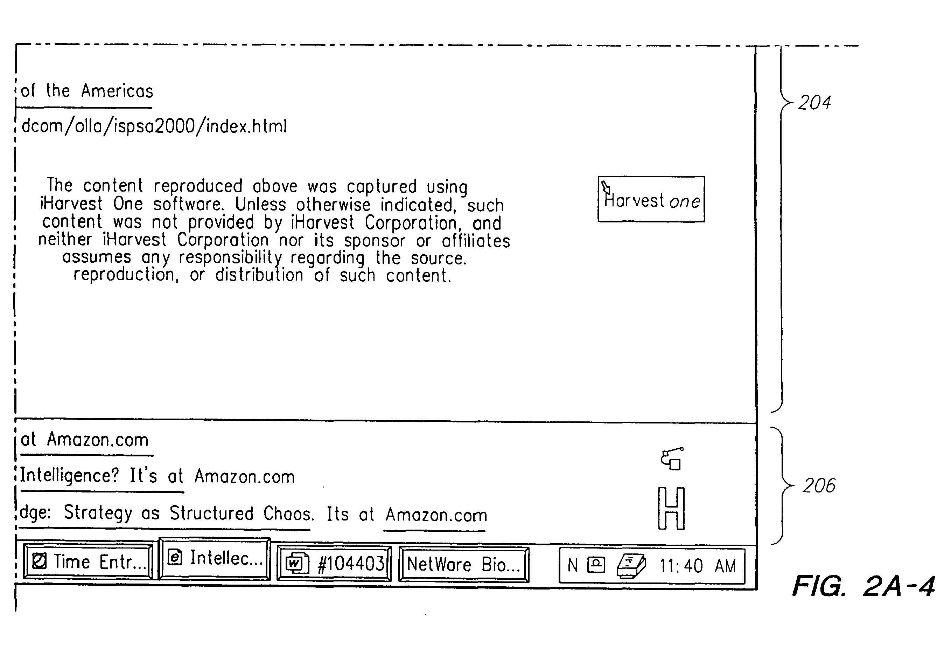

Figure 2A illustrates an embodiment of a browser display 200 generated by one version of the invention. The browser display 200 has a toolbar 202, a browser window 204, a advertising panel 206, a browser plug-in window 222 comprising a search word entry bar 208, a collection map 212 for displaying the user's items in the structure of the user's Context Database, which is a WebBase in this embodiment, further comprising click buttons including file menu button 214, one click capture button 216, send button 218, Web search button 220, Context Database search button 227, and a tools button 225, and an item list 210.

As shown, a collection entitled PTO 226 comprises a number of items including two items of granular information, each stored in a file identified by the names of "Intellectual Property Symposium of the Americas" 228 and "Some Well-Known U.S. Trademarks" 230. A browser window 204 is displaying the contents 215 of the selected item "Intellectual Property Symposium of the Americas"228. A advertising panel 206 is also included in the displayed webpage 200, for displaying relevant advertisements and promotions as selected in one embodiment, based upon matches of keywords of the user's Context Database with keywords of various advertisements and promotions.

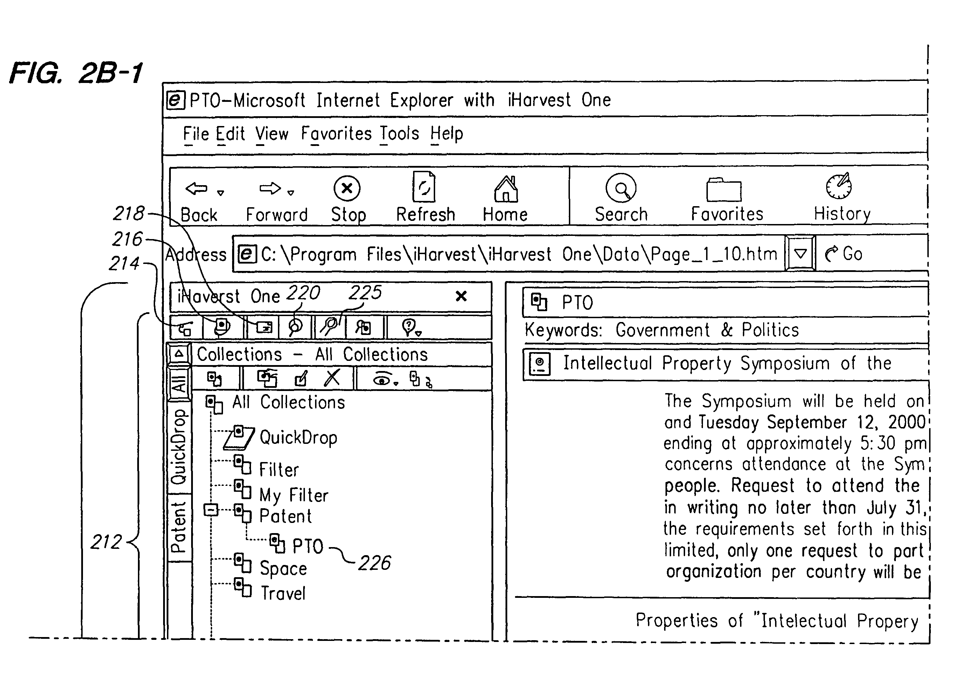

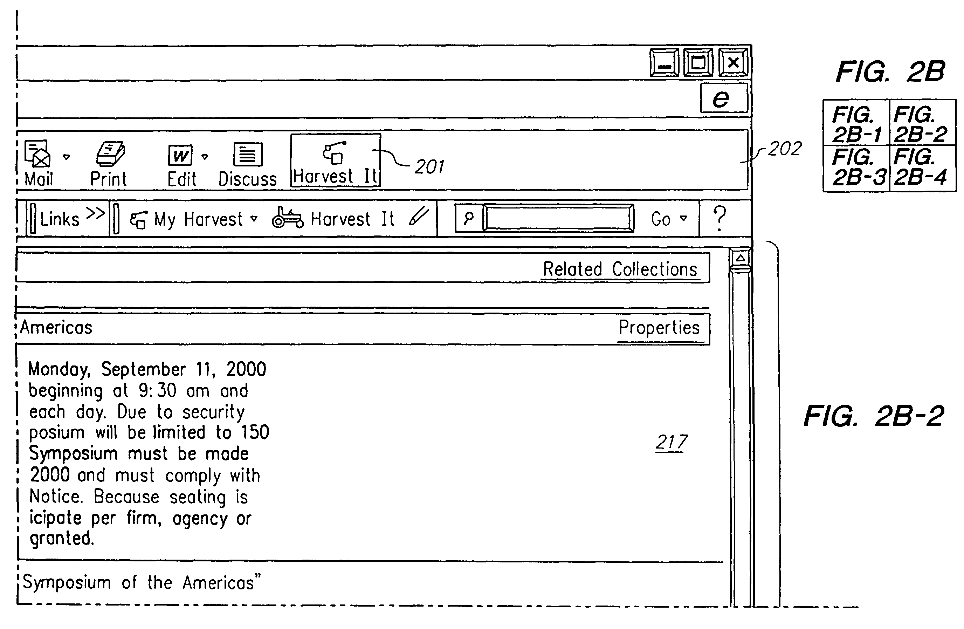

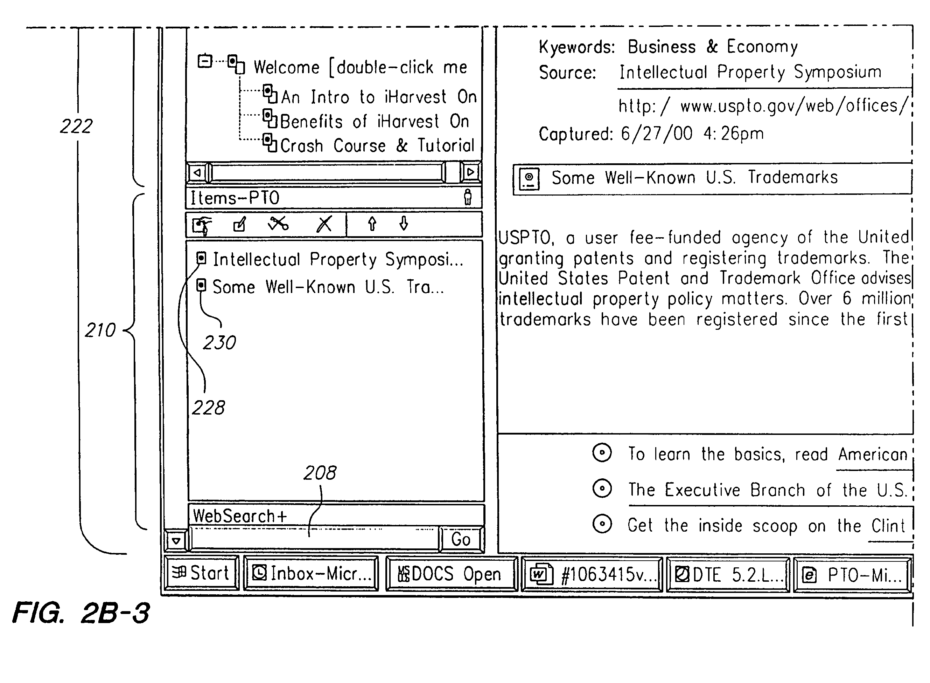

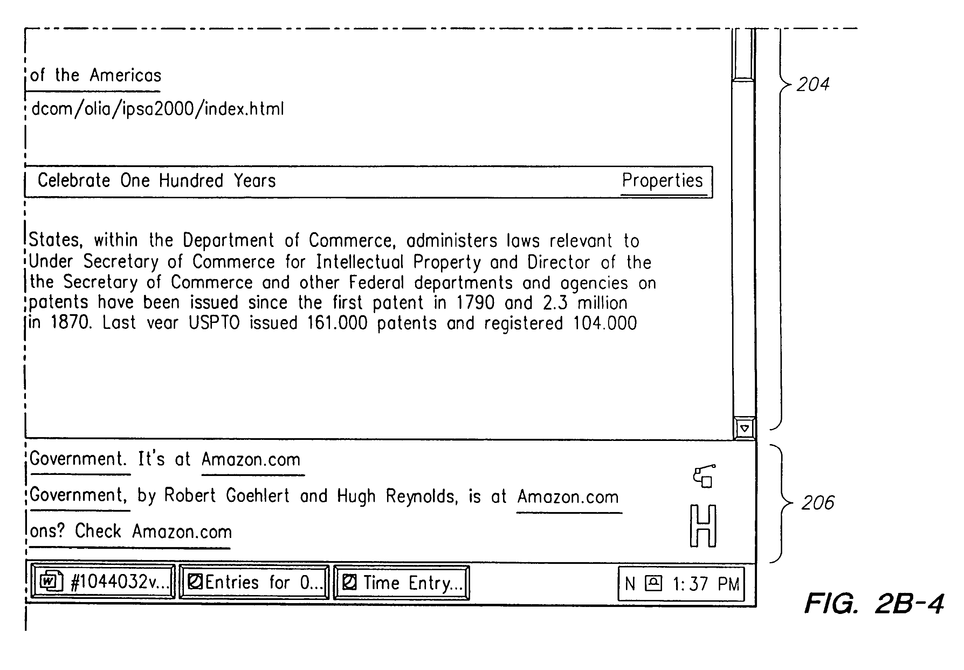

Figure 2B illustrates an aspect of the invention in which granular items are aggregated for the user. When the "PTO" collection 226 is selected in this embodiment, the browser window 204 displays all the granular items in that collection in one aggregated format display 217. In one embodiment of the present invention, items may be dynamically aggregated. For example, Figure 2B shows two items, "Intellectual Property Symposium of the Americas" 228 and "Some Well-Known U.S. Trademarks Celebrate One Hundred Years" 230 displayed together when the PTO collection was selected. The items of captured information are processed such that previously autonomous documents may be intelligently merged. This facilitates browsing, sharing, exporting, importing, searching and sending collections of related granular items to others. As one skilled in the art would realize, many other forms of dynamic aggregation of WebBase items are possible. The ability to perform dynamic aggregation means that information can be easily and flexibly reorganized and repurposed in ways that would simply not be possible with traditional document based systems.

Multiple and often mixed-type formats of digital information can be captured by the capture control. Mixed-type formats include but are not limited to text, images, sounds, third party embeddable objects such as movies, applets, flash, shockwave, as well as links and other files such as word and excel documents.

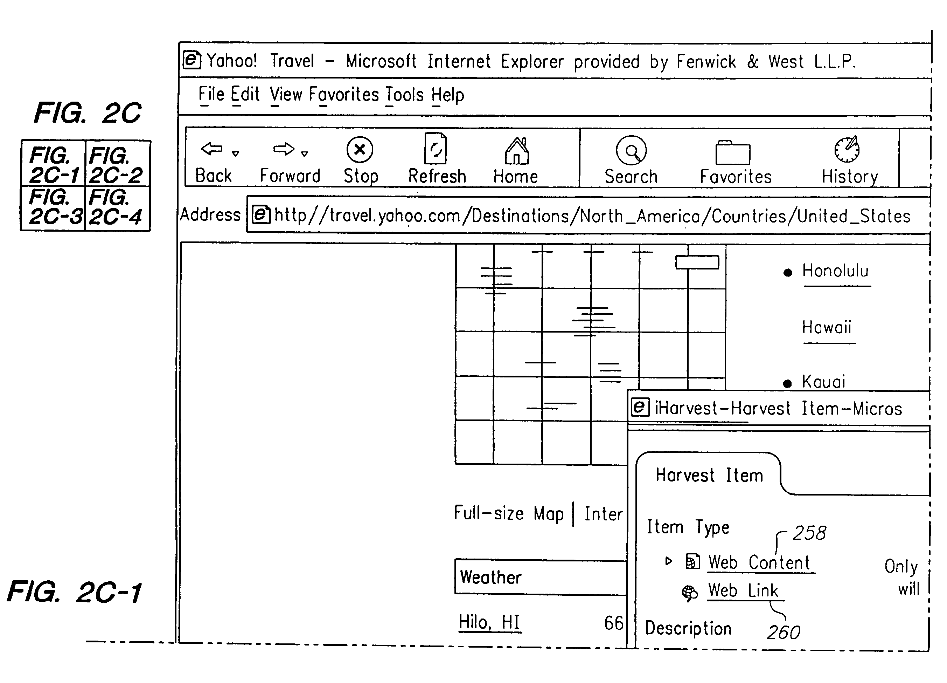

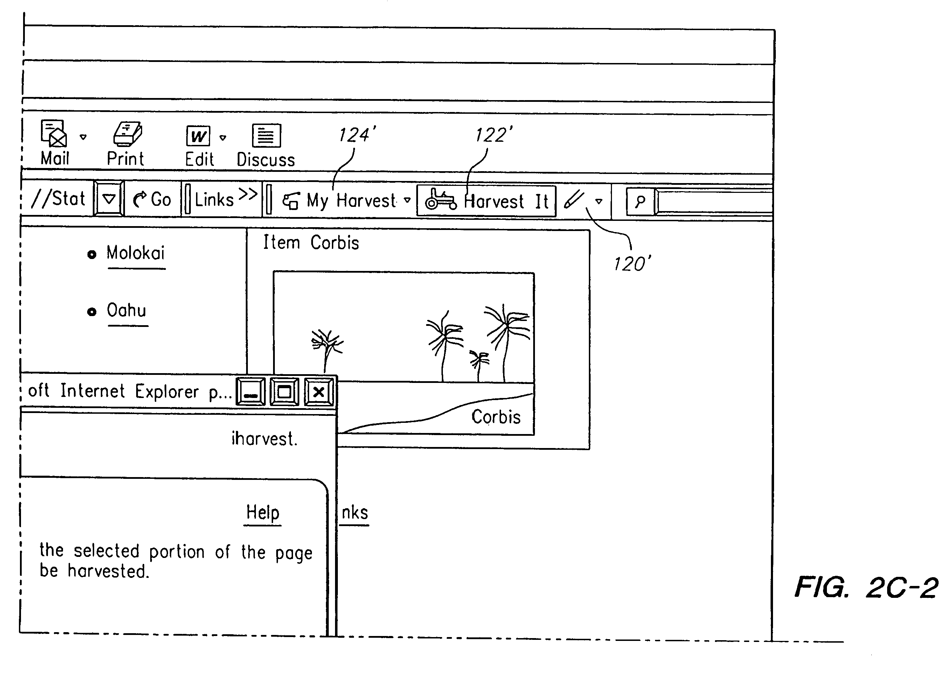

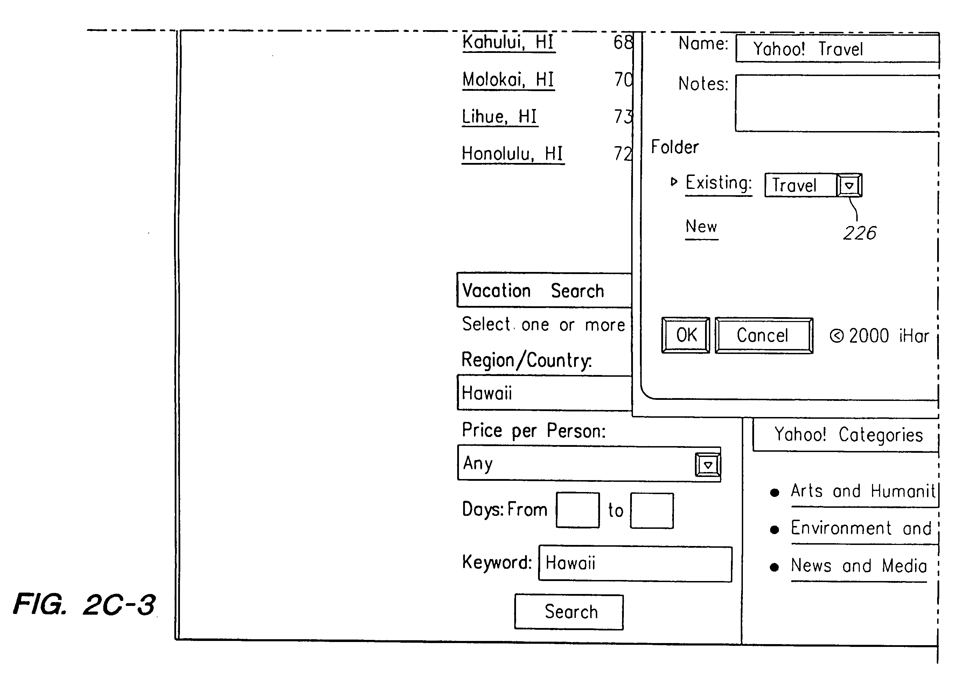

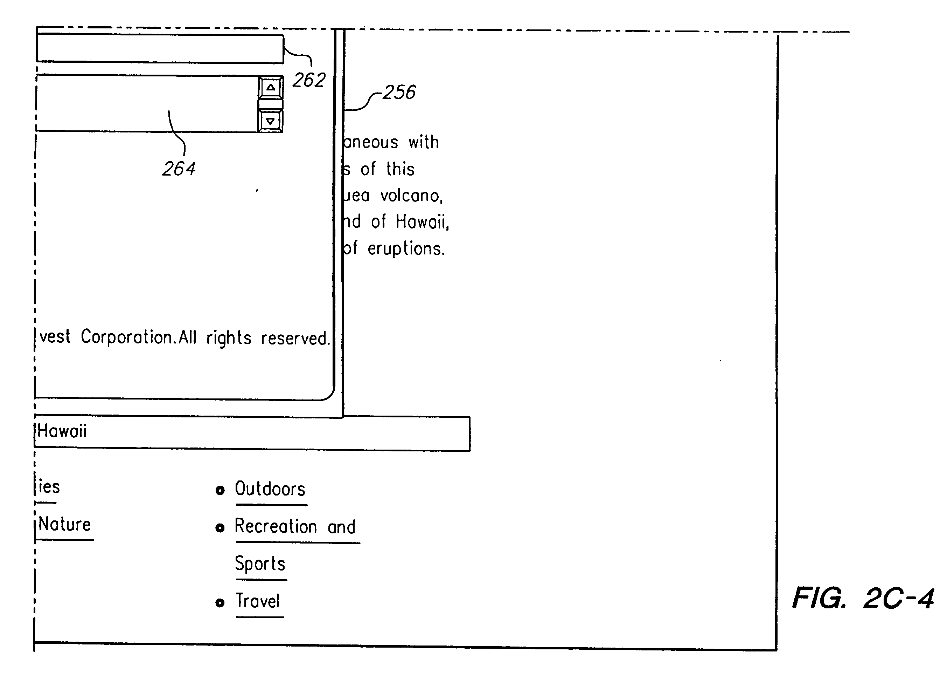

In capturing items, users have the option of capturing coarse grained information or fine-grained information. An example of coarse grained information is a webpage, a document or an encompassing file. An example of fine grained or granular information is a sub-component of a document or an encompassing file. In one embodiment typically used with respect to capturing World Wide Web formatted information as shown in Figure 2C, the user may indicate whether the selected item is to be saved in its granular form, which typically is less than the data of an entire document, by selecting "Web Content" 258 for the item or whether to save the link to the webpage from which the item came by selecting "Web Link" 260. In this embodiment, a name 262 is provided for the item, a Notes section 264, and a folder 226 is suggested for the item, all of which may be changed or added to by the user.

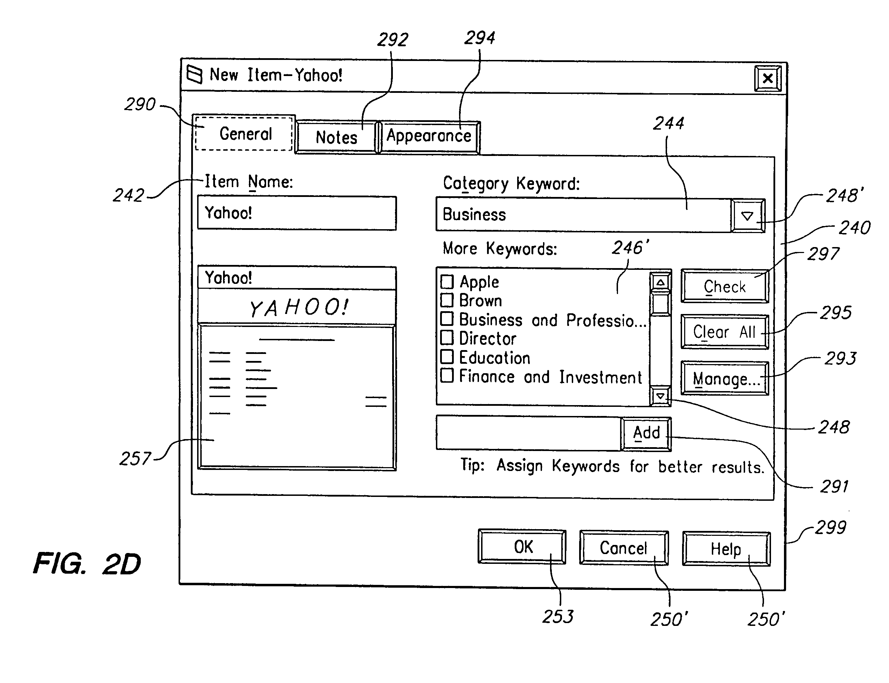

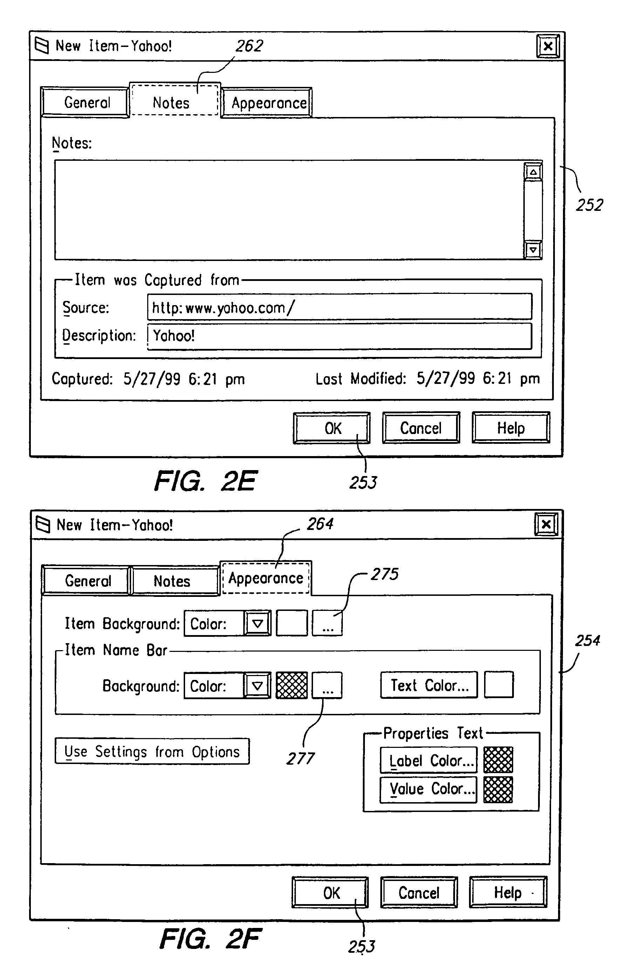

A pop-up window 299 as indicated in Figure 2D is presented to the user for presenting a name for the item 242, a category 244, and suggestions for more keywords 246' which the user may select by manipulating the scroll bars 248 and the Add 291, Manage 293 and OK 253 click buttons. Also presented to the user in a window 257 of the box is the source of the item, a description of the source and the date and time of capture. A user accepts the item to be inserted in his Context Database by clicking the OK button 253. The user can also adds notes or change the appearance of the item by clicking on the "Notes" 292 button and the "Appearance" 294 button respectively. A pop-up window 252, an example of which is shown in Figure 2E, is displayed to the user to allow entry of notes, and a pop-up window, an example of which is shown in Figure 2F, is shown that a user can use to change the appearance of the item.

Figure 3A illustrates an embodiment of a computer-implemented system 320 for capturing and managing granular information from digital sources embodied as a browser plug-in to a browser 360 running on client computer 118'. The user's selection of a one click capture button 120' or 216 is communicated to a capture control 322. The capture control 322 interacts with operating system 164 and application specific
access protocols. For example, when a user has selected 110' a granular item of information 112' as indicated in Figure 1 and has activated the one click capture button, the item is pasted to the operating system clipboard. The capture control 322 in the embodiment shown examines the captured content on the clipboard 168 in the available clipboard formats and selects the one that affords the best translation to a Uniform File Format. The item in the selected format is then passed along to the Uniform File Formatter, 324. In another example, when a user captures an item directly from the browser 360, the capture control 322 examines the browser's internal data structure or document object model and passes along the relevant file formatting information from this data set to the Uniform File Formatter 324.

The Uniform File Formatter 324 places captured items in a uniform format. In one embodiment of the invention, the Uniform File Formatter transforms all items into an "aggretabable" format so that the items may be dynamically aggregated. For example, Figure 2B shows the items in the selected PTO collection 226 aggregated into one displayed HTML document 217 in the browser window 204. An item stored in aggregatable format maintains its presentation integrity regardless of its placement in an aggregated display.

The meta-data generator 326 is shown as a separate element, but its functions and those of the uniform file formatter 324 can be performed together in a single pass of the captured item. The meta-data generator 326 associates meta-data with an item. Examples of meta-data include but are not limited to, a name, a category, keywords, a source, and a source description. Meta-data is used to provide context to a user's Context Database 140'. The generated meta-data is presented to a user through a user interface as shown in Figure 2D for approval and / or for changes and additions. The meta-data generator includes those changes and / or additions that are received from a user 338. The meta-data generator communicates the meta-data to the Context Database Manager 330 so that the meta-data can be stored in the user's Context Database 140'. Furthermore, the Uniform File Formatter 324 and the Meta-Data Generator 326 communicate with the Generated File Manager 328.

The Generated File Manager 328 will store the item, now in its aggregatable format in a file system 354. In one embodiment, when an item or collection is viewed the Generated File Manager dynamically generates a header that is written to a buffer. The Generated File Manager will locate the item, or items if a collection is selected, in "aggregateable" format, and append it or them to this header. The resulting buffer is written to a file and displayed to the user.

The Context Database Manager 330 stores, retrieves and searches for requested data for the other components of the system from the Context Database 140'. The Context Database comprises the user's formatted files 354, database 356 of meta-data and other attributes, for example a pointer to a location in memory of an aggregatable item, associated with the user's items, and Seed Keywords 358. Examples of Seed Keywords can be found in Appendix C of the Provisional Application. In one embodiment of the invention, Seed Keywords 358 are used by the Context Summarizer 332 under certain conditions in creating a Context Summary.

The Context Summarizer 332 creates a Context Summary, which in one embodiment is a weighted, keyword-based Summary of the user's Context Database 140 by querying the Database. The Context Summarizer 332 comprises a Context Filter 336 which prioritizes the keywords in the Context Summary based on the currently selected item or collection. The Context Summarizer creates a Context Summary each time a user selects an item or collection and sends the Summary to the Profile Analyzer 342, located on the server 128 in this embodiment. In addition, the Context Summarizer creates a Context Summary of keywords when requested by the Search Enhancer to which it returns the Summary.

The Profile Analyzer 342 receives the Context Summary on each selection of an item or collection. In one embodiment, the Context Summarizer 332 includes the category of an item. In another embodiment, the Profile Analyzer 342 will obtain the category of the selected item or collection by requesting it from the Context Database Manager 330. The Profile Analyzer then sends the Summary and the category for the current selection to a Promoter Interface 344 located on a server 128. The Promoter Interface selects a promotion to be displayed to the user. In one embodiment, the Promoter Interface compares the keywords of the current selection with keywords 345 associated with the promotions 343 stored on the server in order to find matches. If a match of the keywords is found, those promotions whose keywords match will be selected. In the embodiment of Figure 3A, the Promoter Interface will generate an HTML document for display in an advertising panel 206.

The Search Enhancer 346 parses a user's search string entered in a search query entry bar 208. The Search Enhancer will send a request to the Context Database Manager 330 to search the Context Database to find occurrences of the words in the meta-data and to retrieve items or collections associated with the words. If any items or collections are associated with the words in the search string, the Search Enhancer requests a Context Summary for each item or collection from the Context Summarizer.

The Search Enhancer creates a Search Summary from the Context Summaries which is sent along with the user's selected search engine to a Query Generator 348 on server 128 in this embodiment. The Query Generator 339 will place the words of the Search Summary in the proper form according to Search Engine Grammar Protocols 339.

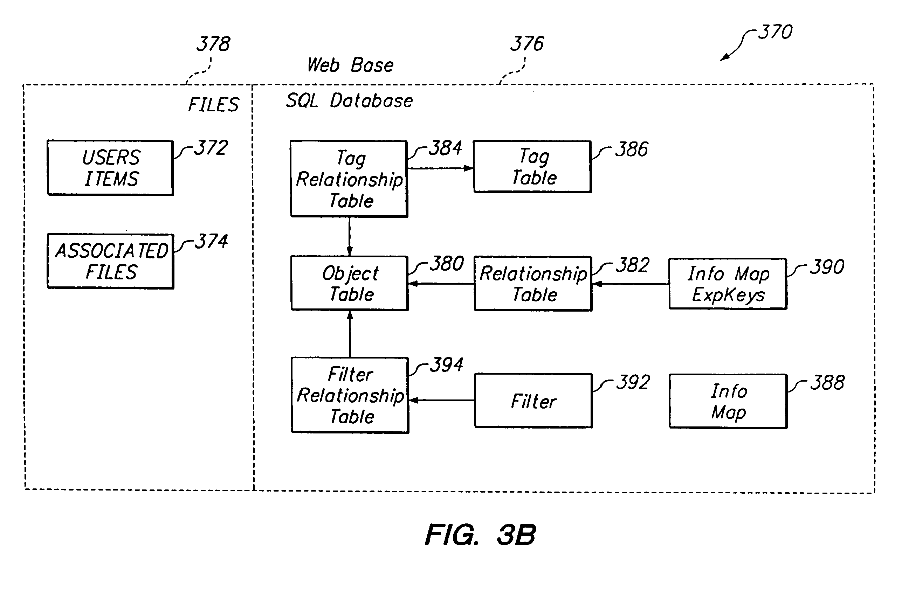

Figure 3B illustrates an embodiment of the Context Database as a WebBase 370 comprising an SQL database 376 and the user's files 378. The user's files comprises the user's items 372, as well as associated files 374 comprising files for referenced objects 374 such as an HTML frame or an embedded object such as an image or movie.

The use of an SQL database aids in the classification, annotation, structuring, and management of the captured information. The SQL database comprises tables that define relationships so as to provide context to the user in managing the WebBase. Examples of table definitions were included in Appendix B of the Provisional Application, which has been incorporated by reference. In particular, the tables include an object table 380, a relationship table 382, a Filter table 392, a Filter Relationship table 394, an info map table 388, an info maps expkeys table 390, a tag table 386 and a Tag Relationship table 384. In one embodiment, an item is represented by an entry in the object table 380. Columns include but are not limited to a key for keying into a particular item, the name of the item, notes, its source, source description, a pointer to the file's location, appearance attributes such as background color, and its child order with respect to a parent collection. Each item belongs in one or more collections as defined in the relationship table 382. For example, each item can be related as a child of one or more parent collections, and each collection can in turn be related as a child of one or more parent collections.

In this embodiment, keywords, categories, and names for each item are represented by entries in the Tag table 386 which are related to the items in the Object Table by relationships defined in the Tag Relationship table 384.

In this embodiment, the info table 388 is defined to keep the current state of the user's selections and the view the user sees of the collections. The Info Map Exp Keys interact with the Relationship table 382 and tracks the current open tree path by recognizing what collections and items are open. When the system is operating, this information will be in random access memory (RAM) can be easily obtained from the RAM rather than performing database queries on the Info Map tables.

The Filter 392 and Filter Relationship 394 tables assist the user in sifting through his or her Context Database. The Filter table 392 comprises several columns defining fields such as a key for indexing into the desired rows, a filter or agent name, annotation, and associated keywords. The Filter Relationship table 392 relates the items in the object table that comply with the selected filter to the filter.

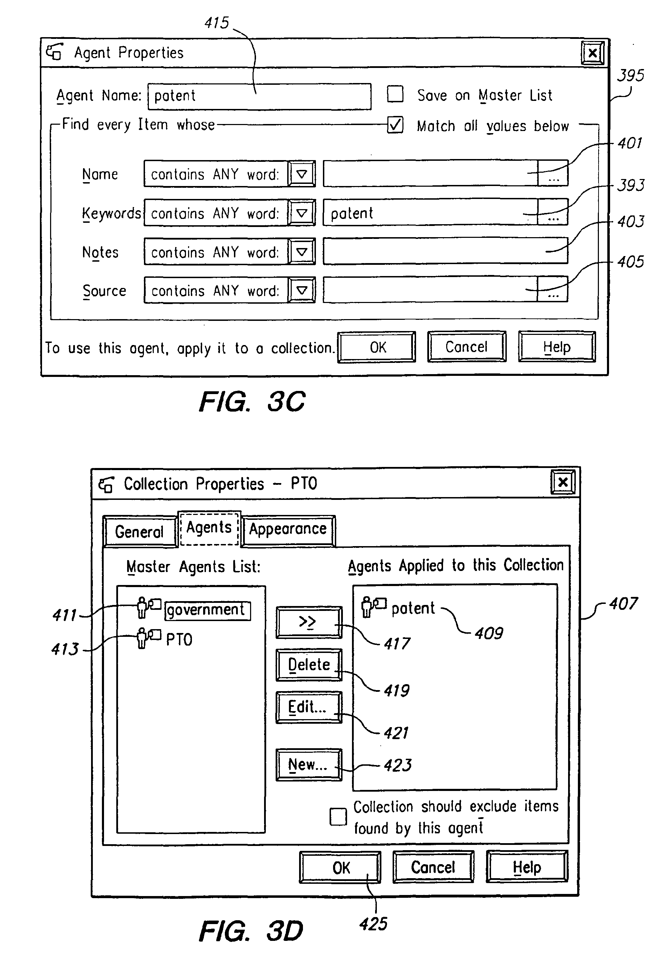

For example, Figure 3C shows a pop-up window 395 as a user interface entitled "Agent Properties" to allow a user to define a filter, in this embodiment is called an agent. In this embodiment, the Filter table 392 comprises columns corresponding to the user's entry of words in the entry bars 415, 401, 393, 403 and 405 to be related to the following list an agent's name, a name of an item, keywords of an item, notes for an item, and a source of an item. In the example of Figure 3C, the user has entered "patent" in the keywords entry bar 393. This will cause the Context Database manager to create a Filter Relationship row for this agent "patent" that relates the items or collections having the word "patent" associated with them with the filter. As seen in the pop-up window 407 in Figure 3D, the PTO collection has the patent agent applied to it. By clicking on button 417, the "government" agent 411 will be applied to the PTO collection also. When a filter command is received from the user, those items or collections associated with the filter will be displayed to the user.

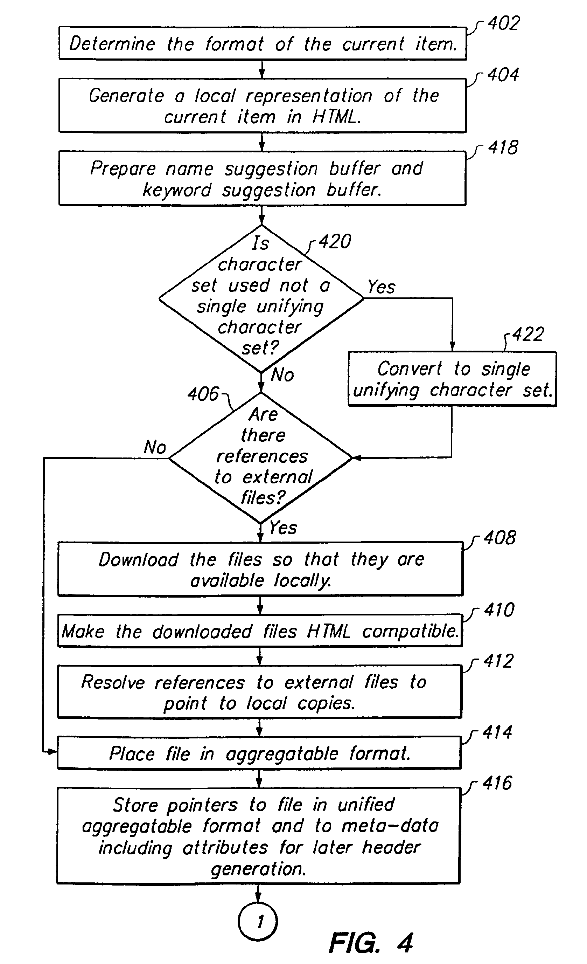

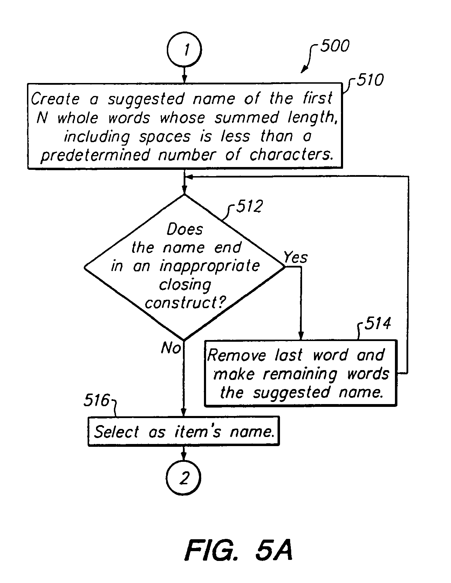

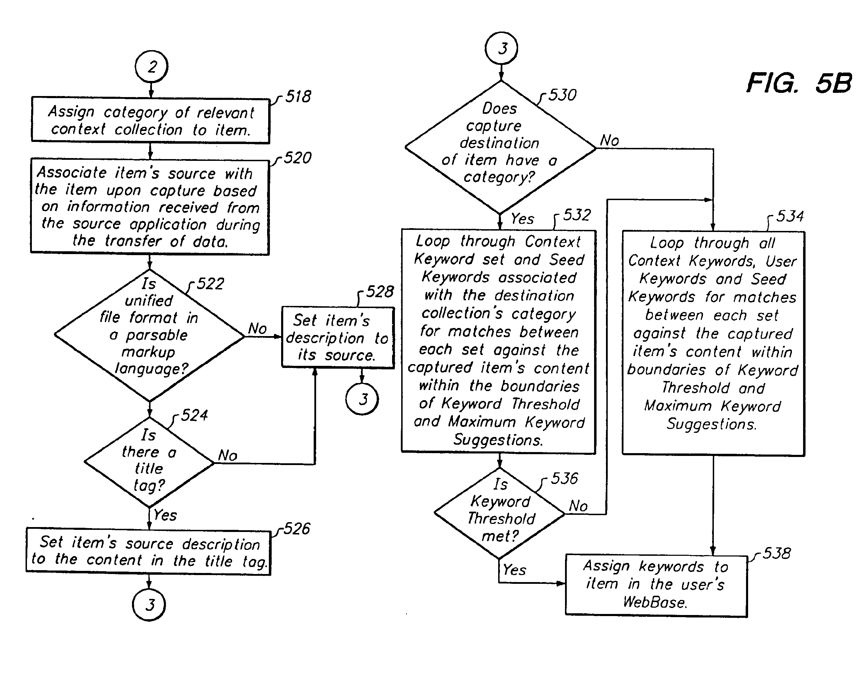

Before a captured item of information is stored in the Context Database of a user, the item is formatted to a uniform file format. Figure 4 is a flow diagram of an embodiment of an overall method of formatting an item to a uniform file format. Figures 5A and 5B describe an embodiment of a process of generating meta-data. In one embodiment of the present invention, a single pass through the captured item is efficiently employed for both purposes of uniform file formatting and generating meta-data.

A single format that is able to encompass many other formats is highly desirable as a uniform file format. Examples of formats that may be encountered include markup languages such as HTML and XML, a URL to an ASCII file (including local files), Rich Text Format, proprietary binary formats such as those used with some word processors for embedded files and hyperlinks, local binary files such as those storing images and other multimedia, a URL to a binary file, and references to "self-managed" embedded objects such as a registered component that interprets and displays data and these objects amalgamated with other data such as Microsoft Excel, Microsoft Word, Acrobat PDF, Flash, and ASCII text.

HTML is used in the following examples as the unifying format. All conversions occur recursively to ensure that the referenced files are appropriately converted as well if necessary.

Figure 4 illustrates an embodiment of a method for converting an item of information into a uniform aggregatable HTML file format. First, the format of the item is determined 402. In the example of Figure 3A, the Capture Control 322 provided the format. Next, a local representation of the current item is generated 404 in HTML. In this embodiment file formatting and meta-data generation are done together in a single pass of the capture item. In preparation for an embodiment of meta-data generation as shown in Figures 5A and 5B, a name suggestion buffer and a keyword suggestion buffer are prepared 418.

In the event that the character set used by the item is not a single unifying character set 420, the item's characters are converted 422 to a single unifying character set. An example of a universal character set is the Unicode or the common unicode mapping UTF8. This conversion is an example of an "aggregateable" transformation. This allows for the aggregation of two items which were previously incompatible based on prorprietaty character set formats.

Next, the existence of references to other external files is determined 406. If there are references to external files, the referenced files are downloaded 408. The downloaded files are made 410 HTML compatible. For example, IMG tags are placed around images, and anchor tags around links. In addition, the references in the item to the external files are resolved 412 to point to the local copies of the files.

The file is placed in aggregateable format 414 by for example, converting absolutely positioned objects to relatively positioned ones. This allows an item to maintain it's presentation integrity regardless of where it falls in an aggregated display.
In additon, the item's header information can be removed from an item's HTML (if it exists) and stored in the Context Database. An example of an attributes that may be saved from the header information to maintain presentation integrity are the colors and fonts in which portions of the item are to be displayed. In the embodiment of Figure 4, pointers to the file in a unified aggregatable format are stored 416 as meta-data including attributes of the item for later header generation upon dynamic aggregation.

The following examples are provided to further illustrate formatting items to a uniform format.

A captured item may already be in a version of HTML. A local representation of the HTML is generated in the version used as the locally stored HTML. Commonly, HTML often references external files to be embedded in the viewable document. The referenced information is downloaded and resolved to point to the local copies. Again, this stage is managed recursively to get all the referenced files and their referenced files.
In one embodiment, a Java Script manages all references with a consistent and unique prefix. The following are examples of how structures may be converted. Frames can be converted to IFRAMEs, or alternatively to TABLEs in order to view combined frames captured on pre-HTML 4.0 systems. Again, a recursive approach is used so that frames within frames within frames are acceptable. Images, sound files, and movies may be stored in local or remote image files. The file is downloaded if necessary, and reference is made to the local copy.

In capturing Java applets referenced, the applets are downloaded and resolved to reference the local copy. Capture of applet is initiated through the capture of the HTML file in which it resides.

Some captured items or referenced files have parameters that can be entered. For example, in the case of a dictionary of major third party, for example Flash or ThingWorld, the embedded application's data file is downloaded as well as the referenced files from the parameter list. Reference to the local copy must be resolved, and the parameters must be altered so that the content can be displayed without loss of information, formatting or function. An example of this would be when capturing a Macromedia Flash file. Flash allows Flash developers to rely on certain parameters such as an input file. When the Flash file is downloaded, this input file must be downloaded as well. The parameter inside the flash tags need to change to reference the new downloaded version.

In the example of an unrecognized embedded application, the application may be downloaded or executed. A heuristic is used to analyze the parameter list by parsing its values. If it has "/" and "." and extension we assume it's a reference to a file which is downloaded. The reference is resolved to the local copy, and the parameters are altered, so content can be displayed without loss of information, formatting or function.

With respect to capture URLs to text files being converted to a markup language such as HTML or XML, the following example present different options. URLs are simple references to files (HTML). In one embodiment, the user is given two options. First, capture the file that is referenced, in which the capture process is simply restarted for treating the data as the file type rather than as a URL.

The other option is to capture only the URL as a bookmark. The URL is then wrapped in the appropriate HTML/XML reference tags, for example <A HREF> </A>.

In converting a file from Rich Text Format (RTF) to HTML/XML, one approach begins by parsing the RTF and converting the formatting tags to HTML tags.

When proprietary binary formats are encountered and the uniform file format is HTML/XML, these formats typically cannot be embedded into an HTML viewer. The file is treated as an HTML link, and the reference to the file is wrapped in the <A HREF> </A> tags.

If a local binary file is to be encapsulated in HTML/XML, the file type is analyzed by considering the file header information, file suffix, and the operating system registered suffix. Then based on industry standard suffix, the file is wrapped in an appropriate HTML tag such as but not limited to an "IMG" tag for an image, a "SOUND" tag for a sound file, or an "EMBED" or "OBJECT"' tag for a recognized HTML/XML plug-in.

If the uniform file formatter encounters a URL to a remote binary file to be converted to HTML/XML, the remote file may be downloaded and managed as in the case of the local binary file.

References to "self-managed" embedded objects to be converted to HTML may request to wrap the object in an "OBJECT" tag with the appropriate parameters as determined by a query to the operating system. If not attainable from the operating system, then a predefined dictionary of embeddable objects is consulted.
In converting ASCII text to HTML/XML, the text is passed through a conversion filter. Formatting is done to maintain the integrity of the text. For example, spaces are converted to "&nbsp", CRLFs are converted to "<BR>", ">" are converted to "&gt" and
"<" converted to "&lt".

HTML has rules and constraints which the content of the text may trigger or violate. The text is passed through a conversion filter that outputs HTML which when viewed in an HTML interpreter (like a Web browser) displays the content that was captured.

Figures 5A and 5B show an overall flow diagram of one embodiment of a process of generating meta-data for an item as may be executed by the meta-data generator. Meta-data is associated with every item the user captures, and as shown in Figure 2D, this meta-data can be viewed and changed by the user. In one aspect of the present invention, the meta-data generated comprises a name, category, keywords, source and source description for each item.

The name suggestion buffer and the keyword suggestion buffer have been prepared 418. The content of the capture item was filtered to provide "relevant" information, meaning information whose formatting tags (bold, italic, position, etc.) has been removed. The relevant information has been stored in both buffers. Examples of relevant information include certain description tags, such as HTML's "ALT" tag, which are considered "relevant" to the item's suggested name and would be retained in this example. This buffer may be limited at a particular size, for example 5K, so as not to negatively affect the product's capture performance.

The meta-data generator creates a suggested name of the first N, a preselected number as may be determined by, for example, file system constraints whole words whose summed length including spaces is less than a predetermined number of characters 510, for example, 128. Once a suggested name is determined, it is checked 512 for an inappropriate closing construct. If the suggested name does end in an inappropriate closing construct, the last word in the name is removed 514 recursively until the closing construct is no longer inappropriate. On this event, the suggested name is selected 516 as the name of the item. The following are examples of inappropriate constructs:
"the", "this", "and", "a", "an", "that", "for", "to", "or", "nor", "though", "although", "if", "who", "which", "whoever", "what", "whose" "these", "those", "whether", "but", "so" "yet", "as", "because", "until", "when", "whenever", "even", "rather", "about", "at", "against", "by", "during", "except", "from", "in", "of", "into", "like", "till", "upon", "with", "while", "since", "&", "...", "|", ":",";",",","/", "\", "-","-", "=", "+"
As would be apparent to one skilled in the art, other words may be selected for removal and added to this list.

In the embodiment shown in Figure 2A, when items are captured, a category is assigned to it such as "Business" or "Travel." The first time an item is placed in a collection with a category, this collection is the "relevant" context collection from which the item automatically inherits its category if one was not already selected by the user. Figure 5B shows that the item's category is assigned based on the first "relevant" context collection with which it was associated 518.

In the embodiment of Figures 5A and 5B, the source of an item is associated with the item based upon information received from the source application during the transfer of data 520.

Part of an item's meta-data in this embodiment is a description. The description can also be created from the name suggestion buffer of relevant information. For example, if the unified file format is in a parsable markup language 522, and there is a title tag 524, the item's description or source description can be set to the content in the title tag 526. If there is no title tag associated with the item 522, 524, then the item's description can be set to its source 528.

Next, keywords are associated with the item. In the embodiment of Figures 5A and 5B, the relevant information is stored not only in a name suggestion buffer, but also in a keyword suggestion buffer 506. In this embodiment, a larger keyword buffer, 50K, is desired.

In determining keywords, the meta-data generator will draw on keywords from one or more of the following sets of keywords. The first set would be the User Keywords which refers to the set of all user keywords, rather than the context-specific set described as Context Keywords. As shown in the example of Figure 2D, a user can enter keywords to be associated with an item or accept keywords suggested for an item. These keywords form the set of user keywords.

Another set of keywords is the set of Seed Keywords which comprises a database of seed keywords 358 that can be particularly helpful before users have built up their own useful database of keywords. These keywords are grouped by category to enable smart keyword suggestion.

There is also the set of Context Keywords. Context Keywords are those keywords associated with items and collections in the path of the item from the top of the collections hierarchy to the item. The path could have many levels of collections or no levels. Limits as to the number of levels, for example three (3) levels, to be searched and a minimum and maximum number of keywords may be desirable.

An example of such a set of Context Keywords is the union of:
1. All the keywords assigned to collections in the path from the top of the collections hierarchy, for example "All Collections" in Figure 2A, to the destination collection, for example the "PTO" collection in Figure 2A.
2. All the keywords assigned to items in the destination collection. In Figure 2A, this would include the keywords associated with "Intellectual Property Symposium of the Americas" and "Some Well-Known U.S. Trademarks."
3. Keywords assigned to items in collections in the collection path.

Figure 5B continues the generation of meta-data including the generation of keywords. In this particular example, it is first determined whether a capture destination of an item has a category assigned to it 530. If it does, an SQL query of the Object 380, Relationship 382 , Tag 386 and Tag Relationship 384 tables in the user's Context Database, for example a WebBase, is made to capture all the keywords that satisfy the set which is a union of the previous three sets. The result from the query is the Context Keywords set for the particular item.

Furthermore, because the destination collection has a category, the seed keywords associated with its category can also be analyzed for matches.

In the embodiment shown, a keyword threshold, for example 3, for the minimum number of keywords sought is used as well as a maximum keyword suggestions which is a parameter that determines the maximum number of keywords that will be suggested for an item.

The meta-data generator loops through the Context keyword set and the seed words associated with the category of the destination collection matching each set against the captured content 532. The loop is bounded by the Keyword Threshold and the Maximum Keyword Suggestions 532. Additionally, matches made against the earlier set(s) will never be replaced by matches from later sets. If the Keyword Threshold is not satisfied 536 after going through all these keywords, then the selection of possible keywords for matching is broadened as in the case where the destination collection does not have a category. Otherwise, the keywords are assigned to the item as tracked by the meta-data in the user's Context Database 538.

If the destination collection of the item does not have a category associated with it, the keyword sets include the Context Keywords, all User Keywords and all the Seed Keywords. Again, the meta-data generator loops through the Context keyword set, all the user keywords entered and all the seed keywords matching each set against the captured content 534. The loop is bounded by the Keyword Threshold and the Maximum Keyword Suggestions 534. The resulting keywords are then assigned to the item in the user's WebBase 538. In the embodiment of Figure 3B, the meta-data generator would send the resulting keywords to the WebBase manager which would integrate these keywords with the user's WebBase as defined by the tables in the WebBase.

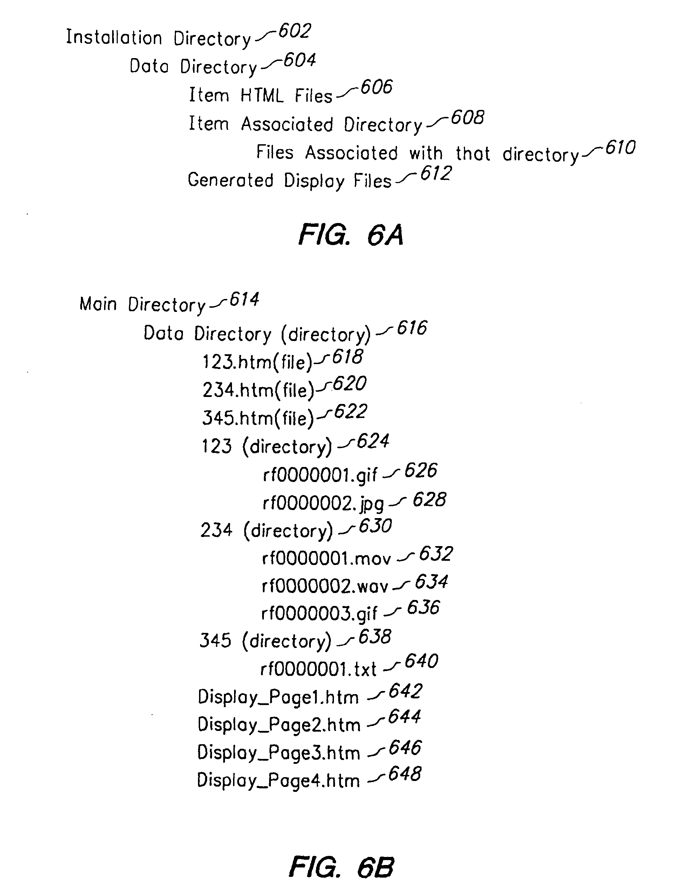

Figure 6A illustrates an example of an item access system, a file system hierarchy for storing an item and the objects it references. In this example, top directory is an Installation Directory 602. At the next lower level is the Data Directory 604 which comprises Item HTML Files 606, Generated Display Files 612 and a Item Associated Directory 608 which is at the same level as the Item HTML Files. Within the Item Associated Directory 608 are the Files Associated with that directory 610 meaning the objects which the associated Item file references.

Figure 6B illustrates an example of 3 items formatted to HTML with references to external files using the file system hierarchy of Figure 6A.

In Figure 6B, the Main Directory 614 is the topmost directory in the file system hierarchy. The first item 618 has been captured from a web site and has been written to the file system as 123.htm (618) in the Data Directory 616. The files it referenced were also downloaded into the directory called 123 (624) which is at the same level as 123.htm in the file system hierarchy. When the HTML was processed for this capture, the relevant references are changed to the 123 directory (624) from references to the World Wide Web.

Similarly, the second capture item was from another web page and is stored under the Data Directory 616 as 234.htm (620), and the referenced files to 234 were downloaded and saved in directory 234 (630) which is at the same level as 234.htm in the file system hierarchy. When File Maker processed this item, the relevant references are changed to the 234 directory (624) from references to the World Wide Web.

The third item is a text file that was captured as a copy from the file system. In this embodiment, the uniform file format is HTML so this text file has been converted to HTML. The HTML file is saved under the Data Directory 616 as 345.htm (622), and the text file 640 is stored into the directory called 345 (638) which is at the same level as 345.htm (622) in the file system hierarchy.

To view item 123.htm for example, the system generates Display_Pagel.htm 642. This page contains some standard HTML tags including <HTML> and <BODY> and some generated HTML that displays the meta-data and appearance preferences suffixed by the entire 123.htm. This simple, blind concatenation is possible for two reasons.
First, when the system creates these granular HTML files, it makes certain that they don't contain any document global information, so they can be strung together endlessly.
The system generates them so that they all reference the appropriate subdirectories; there is no need to subsequently re-process the associated file reference, since all the Items and generated files are at the same directory level.

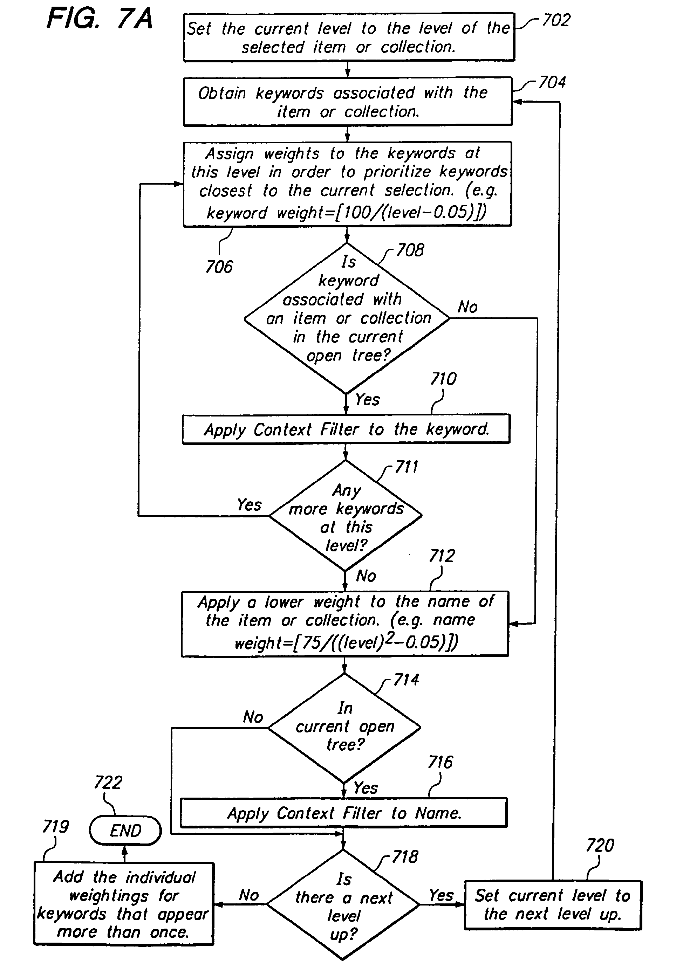

Figure 7A is a flow diagram of an embodiment of a method for creating a Context Summary based upon the user's Context Database. The use of meta-data provides an information context to enhance targeted advertising and searching. The method may be embodied as computer instructions, stored in a computer usable medium, that are executed on a processor.

In one aspect of the present invention, the Context Summarizer 332 distills "usable" pieces of the information out of a Context Database and creates a succinct Summary of the users interest at any given moment. For this embodiment, the Context Summarizer 332 comprises a Database Summarizer 334 and a Context Filter 336. The Database Summarizer analyzes the meta-data associated with each item and the relationships defined in the Context Database, and is able to generate a weighted, keyword-based Summary of the user's interests. This Summarization method effectively provides a multidimensional synopsis of the user's interests in a format that can efficiently be analyzed by a computer.

In the embodiment of Figure 7A, the meta-data, specifically the name and keywords associated with each item, are analyzed. Each item is represented by an entry in the Object table 380, and a keyword is represented by an entry in the Tag table 392. Each item entry has zero or more keywords, as defined in the TagRelationship table 394. Each item belongs in one or more collections as defined in the Relationship table 382. Each collection has one or more parent collections as defined in the Relationship table 380.

In the embodiments shown, the Context Summarizer creates a Context Summary based on the input of two types of information or seeds, the first being a selection of an item or collection, as may be indicated by a user click, and the second being one or more words entered by the user. In the example shown, if the seed is of the second type, the method comprises the actions used for a selection of an item or collection as described in Figure 7A.

In the embodiment of Figure 7A, when received user input indicates selection of an item or collection, a current level variable is set to the level of the item or collection selected by the user, the current selection, 702 in the file system hierarchy. The level of the current selection is the root level. Next, the keywords associated with the item or collection of the current level are obtained 704. All the keywords at this level are weighed with a formula, such as [100 / (level - 0.05)], that prioritizes keywords that are closest to the root level 706.

In this embodiment, by reading the Tag Relationhip 384 table, a determination is made as to whether the keyword is associated with an item or collection in the current open tree 708. The current open tree is the path in the file system hierarchy from the top level collection, for example All Collections in Figure 2A, to the root level of the item or collection. For example, if the user clicks on the item "Intellectual Property Symposium of the Americas" 228 , the current open tree would include, "Intellectual Property Symposium of the Americas" 228, the PTO collection 226, the Patent collection 224, and the All Collections collection 223. If the keyword is associated with an item or collection in the current open tree, a Context Filter is applied to the keyword 710 to provide additional weight to this keyword. The Context Filter adds additional weighting to collections and items in the currently active path. This enables the present invention to not only know the user's interests, but also to know the user's specific interest at any given moment.

After each keyword has been weighed at the current level 711, the name of the item or collection 712 has a lower weight applied to it 712. For example, the weight of the name may be determined by [75/((level)2 - 0.05)]. If it is determined that the item or collection is in the current open tree 714, the Context Filter is also applied to the name 716. If there is another level up in the file hierarchy 718, the current level is set to the next level up 720, and the process repeats until there are no more levels to traverse 722.

The name/keyword weighting is cumulative; if the same keyword was used to define 3 items in the hierarchy their individual weighting would be added together 719.

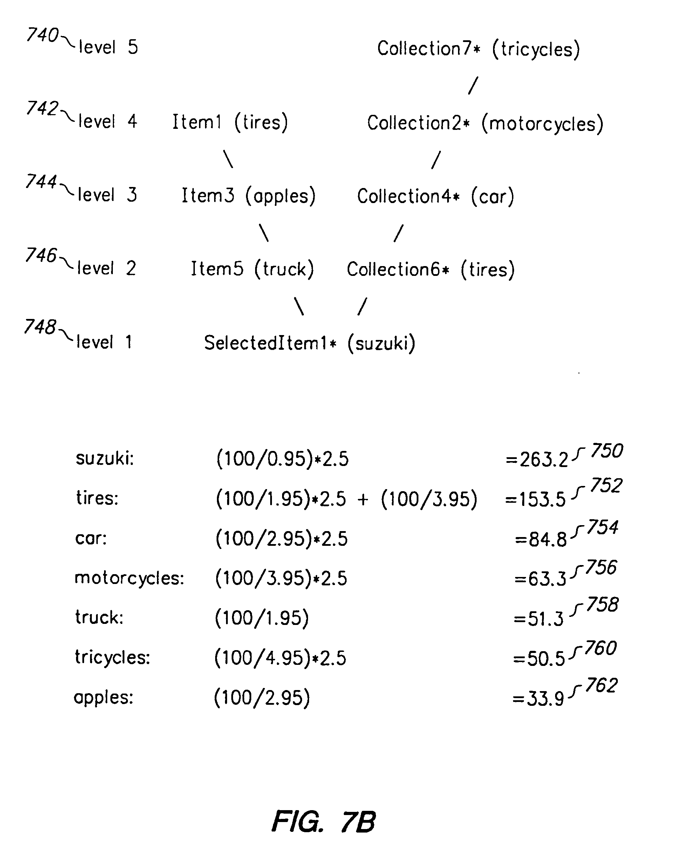

Figure 7B shows an example of creating a Context Summary using the embodiment of Figure 7A. The levels of the tree are assigned in ascending order from 1 for the root level 748, 2 for parent level 746, 3 for the grandparent level 744, up to level 5 740. The example uses the keyword weighting defined by [100/level-0.05]. The weight of a keyword should be highest at the root level 748 and should decrease somewhat for each level we go up in the tree. The 0.05 is subtracted so that a keyword that shows up twice at level 2 746 will be given a weight that is slightly less than the weight of a keyword at level 1 748. If this factor did not exist, the ordering in this case would be arbitrary since the two keywords added together would weigh (100/2)+(100/2)=100 which would be exactly the same as the single keyword at level 1: 100/1 = 100. Using the factor of 0.05, these weights change to 100/0.95=105.3 for the root level keyword and (100/1.95)+(100/1.95)=102.6 for the keyword that shows up twice at level 2.

As indicated in Figure 7A, the title is given less weight and the title weight in this example is defined as [75/(level²)-0.05]. The weight of a title should be highest at the root level 748, but should be lower than a keyword found at the same level. In addition, the weight of a title should decrease rapidly as we move up in the tree. Note that 0.05 factor exists here for the same reason as above.

The Context Filter in this example is embodied as an additional multiplicative factor. If the item or collection being evaluated is in the current open tree as denoted by the asterisk, the weighting will be multiplied by 2.5. This factor was chosen so that a keyword/title from an item or collection at level 4 in the current open tree would have more weight than a keyword/title from another at level 2 which is not in the current open tree.

Notice that the words 750, 752, 754, 756, 760 in the current open tree will be weighed higher than words on the non-current path until up to the 5th level 740. This is where the factor of 2.5 prioritizes certain keywords over others. Notice that "tricycles" 760 is weighed lower than "truck" 758 even though it is in the current open tree path.

The weights of a word/phrase are added if it already exists in the current path as is shown by the weight of "tires" 752 in the example above.

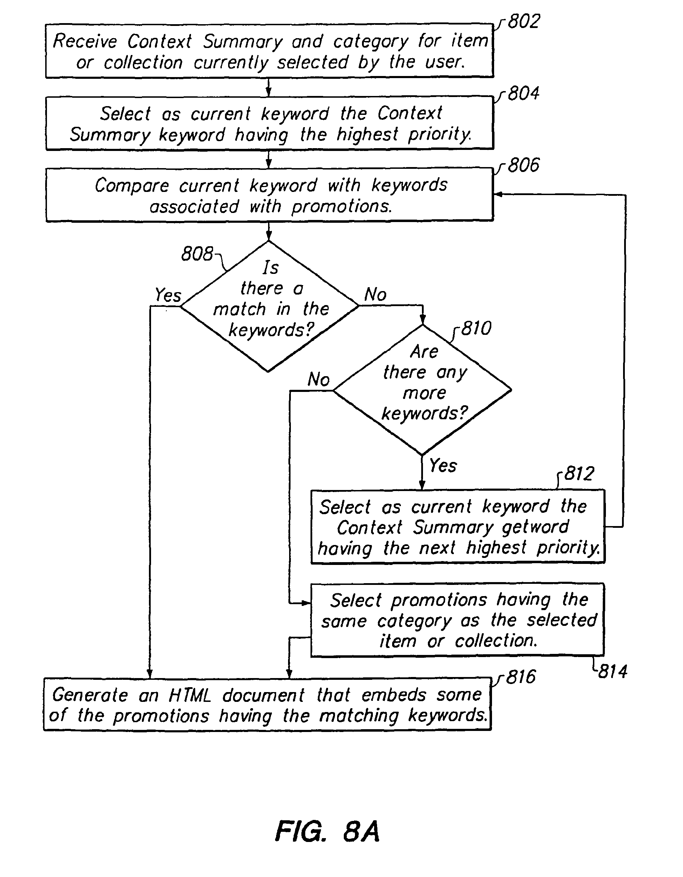

Figure 8A is a flow diagram of an embodiment of a method of selecting a targeted advertisement using the Context Summary in accordance with the present invention. A Context Summary and a category is received for an item or collection currently selected by the user 802. In one embodiment of the Context Summarizer 332, the category is included with a prioritized list of Context Summary keywords. One example of how the keywords can be prioritized is by applying the weighted method described in Figures 7A and 7B.

In this embodiment, the Context Summary keyword having the highest priority is selected 804 as the current keyword. The current keyword is compared 806 with keywords that are associated with promotions. If a match 808 occurs, an HTML document is generated 816 that embeds some of the promotions of the matching keywords for display to the user, such as in the Advertising Panel 206 of Figures 2A and 2B.

However, if a match has not occurred, it is determined 810 if there are any more keywords. If so, the Context Summary keyword having the next highest priority is selected 812 as the current keyword and the comparison 806 is repeated, along with the checks on matches 808 and the number of keywords 810 until either a match is found or there are no more keywords.

If there have been no matches, and there are no more keywords, promotions are selected 814 having the same category as the selected item or collection, and the HTML document is generated 816.

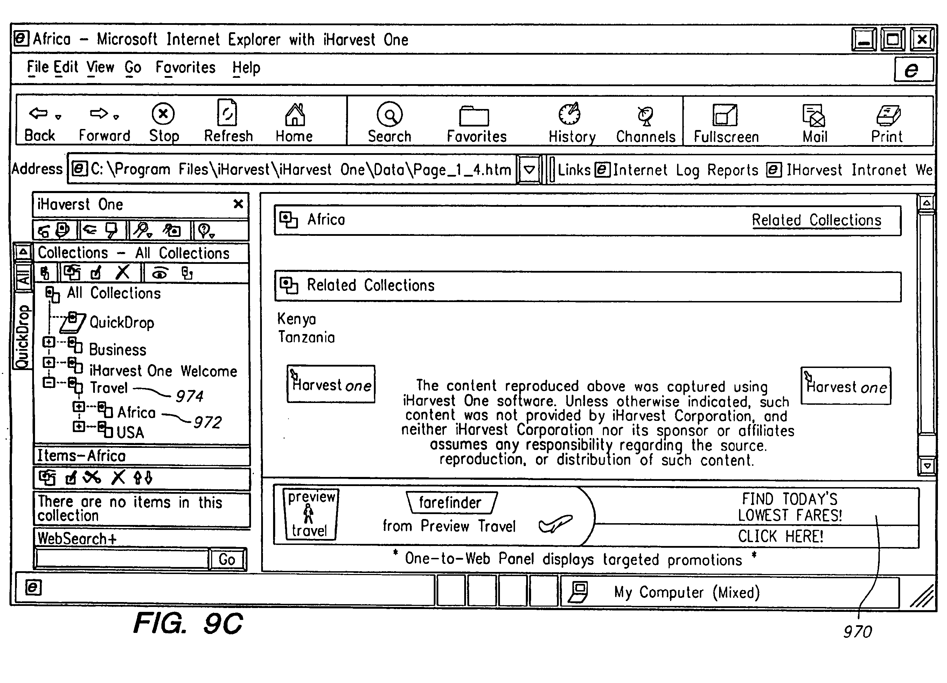

An example of such a generated document is the advertisement 970 for the lowest fares available in Figure 9C that is brought up by the user's click on Africa 972 in the Travel collection 974.

Another aspect of the present invention provides "searching in context". When an item or collection is selected, and it is requested that a search of the Internet be performed in the context of the selected item, the Context Summary is used to synthesize a powerful search query. This query, which is generally much more sophisticated and complete than the ones a user would typically type, is passed along to existing search portals. Because the query provides the search portals with dramatically more information than most manually entered queries, the search engines typically return results containing more relevant hits.

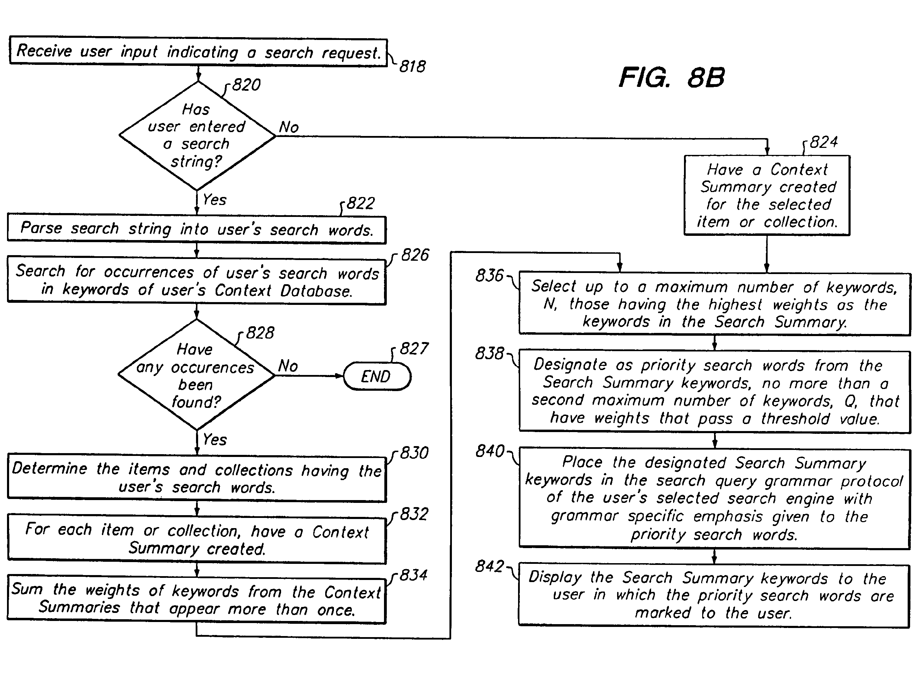

Figure 8B is a flow diagram of an embodiment of a method of providing an enhanced search string to a user. In one embodiment, this method is performed by the Search Enhancer 346. There are two ways that a user may initiate a search. The user may click on an item or collection and request a search on it such as by clicking on Web search button 220, or a user may enter a search string in, for example the search query bar 208.

The user input indicating a search request is received 818, and a determination is made whether a search string 820 has been entered. If not, then an item or collection has been selected, so a Context Summary is created for the selected item or collection 824. If a search string was entered, the search string is parsed 822 into the user's search words.

The keywords in the user's Context Database 140 are searched 826 for occurrences of the user's search words. If no occurrences have been found, the method terminates 827 in this embodiment. Otherwise, the items and collections having the user's search words 830. For each item or collection, a Context Summary is created 832. Weights of keywords that appear more than once in all of the Context Summaries are summed 834.

Whether the user clicked on an item or collection, or entered keywords, a Search Summary is generated based upon the results of the Context Summarizing by selecting 836 up to a maximum number of keywords, N, those having the highest weights as the keywords.

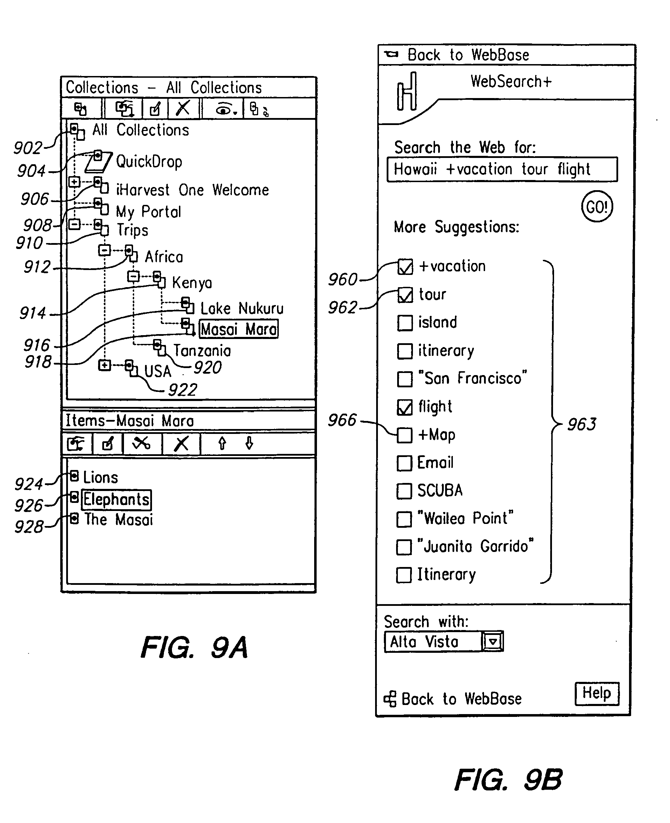

Next, a number of keywords, the number of which does not exceed a second maximum number of keywords, Q, that have weights that pass a threshold value are designated 838 as priority search words. The Search Summary keywords are placed in the search query grammar protocol of the user's selected search engine 840 with grammar specific emphasis given to the priority search words. An example of such a protocol is including a "+" sign before a word to indicate that the word must absolutely be contained in the result. The Search Summary keywords are then displayed 842 to the user with the priority search words marked to the user. An example of such a list of Summary Keywords 963 is shown in Figure 9B. The plus "+" signs before "vacation" 960 and "Map" 966 indicates that they are suggested as priority search words to the user. The user may select any of the words listed under "More Suggestions" by simply selecting from the Search Summary those words that she would like to add to the query.

Figure 9A illustrates a user interface window in which the user has clicked on "Elephants". The Context Summarizer would add a weight to the name "Elephant" 926 and a less weighting to the name "Masai Mara" 918 and still less to "Kenya"914 all the way up to "Trips" 910. A similar reduction in weighting applies to the keywords associated with each collection or item, encountered as we traverse the hierarchy to the top. Note that the context is maintained, since the invention traverses up the hierarchy. The meta-data associated with Tanzania 920 would not affect the weighting at all, in the context of Kenya's Masai Mara 918. As a result, the Context Summary for the this click may include the following:
Travel (a keyword associated with every collection under Trips),
Africa (a keyword associated with Masai Mara, Elephant and the name of a collection),
Masai Mara (Keyword for Elephants and the name of a collection), and
Kenya (Keyword for Masai Mara, Elephant and the name of a collection)
Trips (Keyword for Africa, Kenya, Masai Mara and the name of a collection).

To stress the impact of context in determining the final weighting, consider the following example in which the "Elephants" item resides in multiple collections, namely in the Masai Mara collection seen here and in a circus collection somewhere under the "USA" collection.

When the user clicks on the Elephant in the circus collection, the Summarizer will not suggest things like "Kenya" or "Masai Mara". Rather these words would likely be replaced by "circus" and "training" and the like.

The foregoing description of the embodiments of the invention has been presented for the purposes of illustration and description. It is not intended to be exhaustive or to limit the invention to the precise form disclosed. Many modifications and variations are possible in light of the above teaching. It is intended that the scope of the invention be limited not by this detailed description, but rather by the claims appended hereto.

## Claims

1. A computer-implemented system for capturing and managing granular information from digital sources comprising:
a user interface being in communication with a digital source,
a capture control for capturing an item of granular information from a digital source,
an item storage buffer accessible by the capture control for holding the item, and
an item access system adapted to providing access to the item and storing the item.

2. The system of claim 1 wherein said item access system is a file system.

3. The system of claim 2 wherein said file system has a uniform file formatter for converting each item captured to a uniform file format.

4. The system of claim 2 wherein said file system saves external files referenced by an item in local files that are associated with the item.

5. A method for capturing and managing information from digital sources comprising:
(a) capturing an item of granular information from a digital source;
(b) generating meta-data to be associated with each item;
(c) formatting the item into a uniform file format;
(d) storing the item in a file in a file system identified by its associated meta-data;
(e) integrating the meta-data into a WebBase;
(f) synchronizing the meta-data so that it is embedded into the item's file as well as the WebBase;
(g) creating a WebBase Summary by analyzing the meta-data associated with each item and the relationships defined in the WebBase;
(h) focusing on the user's currently active information by context filtering;
(i) creating a Context Summary using a Context Summarizer.
